# EUROPÄISCHE PATENTSCHRIFT

(11) **EP 1 556 524 B1**
(45) Veröffentlichungstag und Bekanntmachung des Hinweises auf die Patenterteilung: **05.12.2007**
(21) Anmeldenummer: 03775092.4
(22) Anmeldetag: 29.10.2003
(51) Int. Cl.: C21D 9/40

(54) **WÄLZAGER IN LUFTFAHRZEUGEN**
ROLLING BEARING IN AIRCRAFT
PALIER A ROULEMENT POUR AERONEFS

(30) Priorität: 30.10.2002 DE 10250459
(43) Veröffentlichungstag der Anmeldung: 27.07.2005
(73) Patentinhaber: Schaeffler KG, 91074 Herzogenaurach (DE)
(72) Erfinder: KREISELMEIER, Gerhard, 97456 Dittelbrunn (DE); SEBALD, Wilhelm, 97631 Bad Königshofen (DE); EBERT, Franz, Josef, 97762 Hammelburg (DE)
(86) Internationale Anmeldenummer: PCT/DE2003/003603
(87) Internationale Veröffentlichungsnummer: WO 2004/040026

(56) Entgegenhaltungen:
- EP-A- 1 167 791
- DE-U- 8 711 624
- GB-A- 1 055 085
- JP-A- 2 168 022
- US-A- 5 507 580

## Beschreibung

### Gebiet der Erfindung

Die Erfindung betrifft ein Wälzlager, das in Luftfahrzeugen insbesondere Hubschraubern eingesetzt wird.

Bei Luftfahrzeugen bestehen besondere Anforderungen bezüglich des Leichtbaus. Aus diesem Grunde müssen auch die Wälzlager, die in diesen Luftfahrzeugen eingesetzt werden, den Anforderungen bezüglich Leichtbau genügen. Bei den gleichzeitig gestiegenen Forderungen hinsichtlich der Leistungsfähigkeit der Wälzlager hat sich das Problem ergeben, dass übliche durchhärtende Wälzlagerstähle aufgrund der bei den hohen Belastungen möglicherweise auftretenden Rissen so nicht mehr verwendet werden können.

In der DE 8711624 U wird ein Wälzlager für Fluganwendungen gezeigt, das den Forderungen nach Leichtbau genügt, jedoch eine sehr schwer herzustellende Form aufweist. Trotz der aufwendigen Form dieses Wälzlagers bzw. der Wälzlagerringe sind die Anforderungen nach möglichst geringer Rissneigung mit dieser Form nicht gelöst.

### Aufgabe der Erfindung

Es besteht also die Aufgabe ein dünnwandig Wälzlagerring in Fluganwendungen vorzuschlagen gemäß Anspruch 1 und Abhängiganspruchen 2-7, bei dem die Rissgefahr reduziert ist.

### Beschreibung der Erfindung

Die Aufgabe wird erfindungsgemäß durch die Merkmale im kennzeichnenden Teil des Anspruches 1 gelöst.

Der Kern der Erfindung besteht darin, dass die Laufringe des Wälzlagers in der Randschicht gehärtet werden. Durch diese Randschichthärtung ist es möglich, auch bei dünnwandigen Werkstoffen die Rissgefahr deutlich zu reduzieren. Durch die geringere Kernhärte der Laufringe wird eine mögliche Rissbildung, die in den Laufflächen bzw. im Wälzkontakt ihren Ursprung nimmt, an der weite ren Ausbreitung gehindert.

Besonders positive Eigenschaften der erfinderischen Ringe ergeben sich bei einer Oberflächenhärte im Bereich der Laufringe von > 613 HV (56 HRC) sowie einer Kernhärte in den dünnwandigen Ringen von > 285 HV (28 HRC). Die Kernhärte wird in einer Tiefe zwischen 8% des Wälzkörperdurchmessers und 90% der Wandstärke der Laufbahn im Laufbahngrund erreicht.

In diesem Zusammenhang wird von dünnwandigen Laufringen dann gesprochen, wenn der Teilkreisdurchmesser (Tₖ) im Verhältnis zum Wälzkörperdurchmesser (D_{w}) größer gleich 20 ist. (Tₖ / D_{w} >= 20).

### Kurze Beschreibung der Figuren

Figur 1 zeigt ein einreihiges Rillenkugellager im Schnitt
Figur 2 zeigt ein zweireihiges Schrägkugellager im Schnitt

### Ausführliche Beschreibung der Zeichnungen

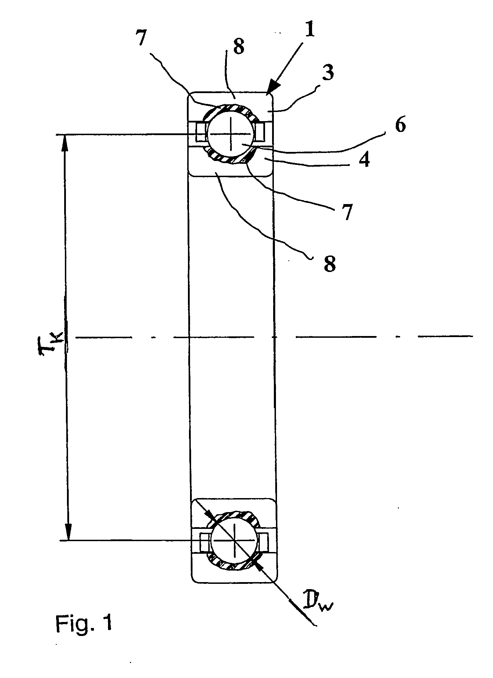

In der Figur 1 wird ein einreihiges Rillenkugellager 1 gezeigt. Der Außenring 3, der Innenring 4 und die Wälzlager 6 sind dargestellt. Der Bereich der Oberflächenhärte 7 von > = 613 HV ist um den Bereich der Laufbahn herum eingezeichnet. Der Bereich der Kernhärte 8 schließt sich an den Bereich der Oberflächenhärte 7 an. Die Lage des Teilkreisdurchmessers Tₖ sowie der Wälzkörperdurchmesser D_{w} sind der Zeichnung aufgeführt. Der Teilkreisdurchmesser Tₖ ist auf den Mittelpunkt zweier gegenüberliegender Kugeln bezogen.

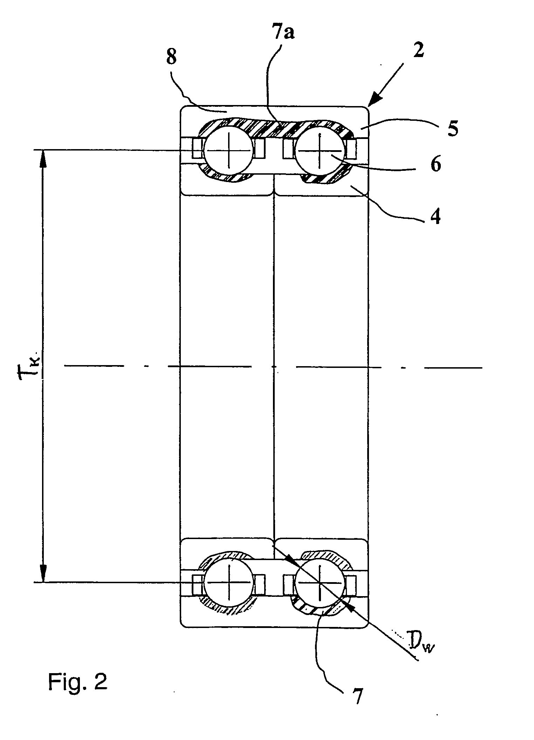

In der Figur 2 ist ein zweireihiges Wälzlager in Form eines zweireihigen Schrägkugellagers dargestellt. Der gemeinsame Außenring 5 umfasst zwei Laufbahnen, in denen die Kugeln 6 abwälzen. Dieses zweireihige Schrägkugellager 2 hat zwei Innenringe 4. Die Lage des Teilkreisdurchmessers Tₖ und des Wälzkörperdurchmessers D_{w} sind Analog zur Figur 1 gezeichnet. Der Bereich der Oberflächenhärte von > = 613 HV ist im Bereich der Laufbahn sowohl des Innenringes 4 als auch des Außenringes 5 dargestellt. Der zusammenhängende Bereich der Oberflächenhärte von zwei benachbarten Laufbahnen 7a ist dargestellt. Bei Bauteilen mit zwei Laufbahnen gibt es auch die Möglichkeit, den Bereich der Oberflächenhärte 7 getrennt um die Laufbahnen zu legen.

### Bezugszeichenliste

- 1: einreihiges Wälzlager, Rillenkugellager
- 2: zweireihiges Wälzlager, Schrägkugellager
- 3: Außenring
- 4: Innenring
- 5: Außenring zweireihig
- 6: Wälzkörper
- 7: Bereich der Oberflächenhärte an der Laufbahn
- 7a: Bereich der Oberflächenhärte für zwei Laufbahnen
- 8: Bereich Kernhärte
- Tₖ: Teilkreisdurchmesser
- D_{w}: Wälzkörperdurchmesser

## Patentansprüche

1. Ein- oder mehrreihiges Wälzlager (1, 2) mit dünnwandigen Laufringen (3, 4, 5), **dadurch gekennzeichnet, dass** die Laufringe (3, 4, 5) aus einem martensitischen, durchgehärteten Stahl bestehen und folgende Merkmale aufweisen:
- eine Oberflächenhärte (7, 7a) von >=613 HV (56 HRC) im Bereich der Laufflächen,
- eine Kernhärte (8) von >=285 HV (28 HRC),
- eine Differenz (Δ) zwischen Oberflächenhärte und Kernhärte >=150 HV (9HRc),
- ein Erreichen der Kernhärte in einer Tiefe zwischen 8 % des Wälzkörperdurchmessers und 90 % der Wandstärke im Laufbahngrund unter der Laufbahn,
- ein Verhältnis des Teilkreisdurchmessers Tₖ zum Wälzkörperdurchmesser D_{w} von >= 20.

2. Wälzlager nach Anspruch 1, **dadurch gekennzeichnet, dass** die Härte bei einer Tiefe von 4 % vom Wälzkörperdurchmesser D_{w} höchstens 70 HV (4 HRC) niedriger liegt als an der Oberfläche.

3. Wälzkörper nach Anspruch 1, **dadurch gekennzeichnet, dass** die Laufringe (3, 4, 5) aus einem korrosionsbeständigen Stahl bestehen.

4. Wälzlager nach Anspruch 1, **dadurch gekennzeichnet, dass** die Laufringe (3, 4, 5) mit Befestigungsflanschen und/oder Versteifungselementen versehen sind.

5. Wälzlager nach Anspruch 1, **dadurch gekennzeichnet, dass** die Wälzkörper (6) aus durchgehärtetem, martensitischem Wälzlagerstahl oder aus randschichtgehärtetem Stahl oder aus korrosionsbeständigem Stahl oder aus Keramik bestehen.

6. Wälzlager nach Anspruch 5, **dadurch gekennzeichnet, dass** die Wälzkörper Kugeln sind.

7. Wälzlager nach Anspruch 5, **dadurch gekennzeichnet, dass** die Wälzkörper Rollen sind.

## Claims

1. Single-row or multi-row rolling bearing (1, 2) having thin-walled raceways (3, 4, 5), **characterized in that** the raceways (3, 4, 5) consist of a martensitic, fully hardened steel and have the following features:
- a surface hardness (7, 7a) of ≥ 613 HV (56 HRC) in the region of the running surfaces,
- a core hardness (8) of ≥ 285 HV (28 HRC),
- a difference (Δ) between surface hardness and core hardness of ≥ 150 HV (9 HRC),
- the core hardness being reached at a depth of between 8% of the rolling body diameter and 90% of the wall thickness in the race base beneath the race,
- a ratio of the pitch circle diameter Tₖ to the rolling body diameter D_{w} of ≥ 20.

2. Rolling bearing according to Claim 1, **characterized in that** the hardness at a depth of 4% of the rolling body diameter D_{w} is at most 70 HV (4 HRC) lower than at the surface.

3. Rolling bearing according to Claim 1, **characterized in that** the raceways (3, 4, 5) consist of a corrosion-resistant steel.

4. Rolling bearing according to Claim 1, **characterized in that** the raceways (3, 4, 5) are provided with securing flanges and/or reinforcing elements.

5. Rolling bearing according to Claim 1, **characterized in that** the rolling bodies (6) consist of fully hardened, martensitic rolling bearing steel or of surface-hardened steel or of corrosion-resistant steel or of ceramic.

6. Rolling bearing according to Claim 5, **characterized in that** the rolling bodies are balls.

7. Rolling bearing according to Claim 5, **characterized in that** the rolling bodies are rollers.

## Revendications

1. Palier à roulement à une ou plusieurs rangées (1, 2) avec des bagues de roulement de faible épaisseur (3, 4, 5), **caractérisé en ce que** les bagues de roulement (3, 4, 5) sont constituées d'un acier martensitique trempé à coeur et présentent les caractéristiques suivantes:
• une dureté superficielle (7, 7a) ≥ 613 HV (56 HRC) dans la région des surfaces de roulement,
• une dureté à coeur (8) ≥ 285 HV (28 HRC),
• une différence (Δ) entre la dureté superficielle et la dureté à coeur ≥ 150 HV (9 HRC),
• l'obtention de la dureté à coeur à une profondeur comprise entre 8 % du diamètre des corps de roulement et 90 % de l'épaisseur de paroi dans le fond du chemin de roulement en dessous du chemin de roulement,
• un rapport entre le diamètre du cercle primitif Tₖ et le diamètre des corps de roulement D_{w} ≥ 20.

2. Palier à roulement selon la revendication 1, **caractérisé en ce que** la dureté à une profondeur de 4 % du diamètre des corps de roulement D_{w} est au maximum inférieure de 70 HV (4 HRC) à celle de la surface.

3. Palier à roulement selon la revendication 1, **caractérisé en ce que** les bagues de roulement (3, 4, 5) sont constituées d'un acier résistant à la corrosion.

4. Palier à roulement selon la revendication 1, **caractérisé en ce que** les bagues de roulement (3, 4, 5) sont pourvues de brides de fixation et/ou d'éléments de renforcement.

5. Palier à roulement selon la revendication 1, **caractérisé en ce que** les corps de roulement (6) sont constitués d'un acier pour roulements martensitique, trempé à coeur, ou d'un acier à couche superficielle trempée ou d'un acier résistant à la corrosion ou de céramique.

6. Palier à roulement selon la revendication 5, **caractérisé en ce que** les corps de roulement sont des billes.

7. Palier à roulement selon la revendication 5, **caractérisé en ce que** les corps de roulement sont des rouleaux.
